# FASCICULE DE BREVET EUROPEEN

(11) **EP 1 498 590 B1**
(45) Date de publication et mention de la délivrance du brevet: **23.04.2008**
(21) Numéro de dépôt: 04291712.0
(22) Date de dépôt: 07.07.2004
(51) Int. Cl.: F02B 37/10, F02B 37/02, F01N 3/30, F02D 9/04

(54) **Moteur à combustion interne à quatre temps suralimenté avec dispositif d'échappement des gaz d'échappement à volume variable et procédé de fonctionnement d'un tel moteur**
Aufgeladene Viertakt-Brennkraftmaschine mit einer volumenändernden Abgasvorrichtung und Betriebsverfahren für eine solche Brennkraftmaschine
Turbocharged four stroke internal combustion engine having a variable volume exhaust gas device and method of operating such an engine

(30) Priorité: 15.07.2003 FR 0308635
(43) Date de publication de la demande: 19.01.2005
(73) Titulaire: Institut Français du Pétrole, 92852 Rueil-Malmaison Cedex (FR)
(72) Inventeur: Pagot, Alexandre, 92500 Rueil-Malmaison (FR)

(56) Documents cités:
- EP-A- 0 247 631
- CH-A- 285 897
- DE-C- 19 833 134
- FR-A- 2 649 756
- FR-A- 2 768 178
- FR-A- 2 831 609
- GB-A- 1 164 018
- US-A- 4 506 633

## Description

La présente invention se rapporte à un moteur à combustion interne suralimenté à quatre temps avec un dispositif d'échappement à volume variable pour la collecte des gaz d'échappement.

Généralement, un moteur à combustion interne à quatre temps comprend une multiplicité de cylindres comprenant une chambre de combustion à l'intérieur de laquelle se produit une combustion d'un mélange de fluides, généralement de l'air, et d'un carburant. Le résultat de cette combustion génère des gaz brûlés ou gaz d'échappement qui sont évacués en dehors de ces chambres.

Le couple délivré par un tel moteur est fonction notamment de la quantité d'air introduite dans la chambre de combustion de ce moteur, quantité d'air qui est elle-même proportionnelle à la densité de cet air. Ainsi, en cas de besoin d'un fort couple pour ce moteur, l'air est comprimé avant son admission dans la chambre de combustion. Cet air, généralement dénommé air suralimenté, est comprimé par tous moyens connus, tels que par un turbocompresseur ou par un compresseur entraîné, comme un compresseur à vis par exemple.

Dans le cas d'une utilisation d'un turbocompresseur, une partie de l'énergie perdue dans les gaz d'échappement est récupérée au moyen d'une turbine placée dans le flux de ces gaz. Cette énergie est utilisée positivement pour comprimer l'air d'admission, ce qui augmente le remplissage en air et accroît donc les performances du moteur. Habituellement, ces gaz d'échappement proviennent d'un ou plusieurs collecteurs d'échappement reliés aux moyens d'échappement des cylindres.

Comme cela est connu en soi, le débit de gaz d'échappement sortant des chambres de combustion varie, de manière non négligeable, entre le fonctionnement du moteur à bas régimes et à hauts régimes.

Pour les bas régimes, il est nécessaire d'utiliser des collecteurs d'échappement spécifiques pour récupérer au mieux l'énergie des gaz d'échappement pour pouvoir réaliser l'entraînement de la turbine. Ceci se réalise généralement en utilisant un collecteur d'échappement avec de faibles sections et volumes pour guider au mieux les ondes de pression d'échappement et récupérer le plus d'énergie possible pour entraîner la turbine.

Pour les hauts régimes, les faibles sections et volumes de tels collecteurs pénalisent la vidange des cylindres et augmentent les pertes par pompage. De ce fait, l'évacuation des gaz brûlés est ralentie et une partie de ces gaz n'est pas évacuée hors de la chambre de combustion du moteur. Ces gaz brûlés résiduels sont générateurs de cliquetis, pour les moteurs à combustion interne à allumage commandé, du fait de leurs hautes températures et, de plus, limitent le remplissage en air frais de la chambre de combustion lors de la phase d'admission du moteur.

Il est également connu par le document DE 19833134 d'utiliser un moteur comprenant un réservoir de stockage employé en tant qu'accumulateur de pression et dans lequel sont stockés des gaz d'échappement sous pression.

Ce type de moteur présente l'inconvénient de diriger les gaz d'échappement vers cet accumulateur uniquement lorsque la pression dans celui-ci est insuffisante.

Dans le document FR 2 649 756, le moteur suralimenté comprend des moyens de collecte des gaz d'échappement comprenant les tubulures d'échappement qui aboutissement à un collecteur relié à une enceinte de détente par un raccordement portant une valve d'obturation. Cette enceinte de détente permet de faire varier le volume des gaz d'échappement pour optimiser la récupération d'énergie par le turbocompresseur.

Le moteur décrit permet ainsi l'adaptation du volume des gaz d'échappement au fonctionnement du turbocompresseur mais présente l'inconvénient ne pas pouvoir absorber la variation de volume de gaz d'échappement lors des différentes phases de fonctionnement du moteur.

La présente invention se propose de remédier aux inconvénients précités grâce à un moteur comprenant un dispositif d'évacuation des gaz brûlés de conception simple applicable pour tous les régimes du moteur tout en absorbant les variations de volume des gaz d'échappement sans pour cela pénaliser les performances de ce moteur.

A cet effet, la présente invention concerne un moteur à combustion interne à quatre temps comportant au moins deux cylindres avec une chambre de combustion, un moyen d'admission d'air comprenant une tubulure associée à un moyen d'obturation, un moyen d'échappement comportant une tubulure avec un moyen d'obturation, des moyens de collecte des gaz d'échappement comprenant ladite tubulure d'échappement et au moins un collecteur, des moyens d'accroissement du volume collecté des gaz d'échappement en communication sélective avec les moyens de collecte de gaz d'échappement, et des moyens d'obturation de la communication entre lesdits moyens de collecte et les moyens d'accroissement, caractérisé en ce que les moyens d'accroissement comprennent une capacité (34) et que les moyens d'obturation comprennent un boisseau rotatif, logé à l'interieur de la capacité (34).

Les moyens d'accroissement peuvent être en communication sélective avec les tubulures d'échappement.

Les moyens d'accroissement peuvent être en communication sélective avec au moins un collecteur.

Avantageusement, les moyens d'obturation peuvent être contrôlés par un moyen de commande.

Préférentiellement, le boisseau peut comprendre des lumières.

L'invention concerne également un procédé de fonctionnement d'un moteur à combustion interne suralimenté comportant au moins deux cylindres avec une chambre de combustion, un moyen d'admission d'air comprenant une tubulure associée à un moyen d'obturation, un moyen d'échappement. comportant une tubulure avec un moyen d'obturation, des moyens de collecte des gaz d'échappement comprenant lesdites tubulures et au moins un collecteur, des moyens d'accroissement du volume collecté des gaz d'échappement, en communication sélective avec les moyens de collecte de gaz d'échappement, et des moyens d'obturation de la communication entre lesdits moyens de collecte et les moyens d'accroissement, caractérisé en ce qu'on commande les moyens d'obturation pour que, pendant le fonctionnement à hauts régimes du moteur, les gaz d'échappement soient évacués, d'une part, vers les moyens de collecte et, d'autre part, vers les moyens d'accroissement du volume collecté des gaz d'échappement et, pendant le fonctionnement à bas régimes du moteur, pour que ces gaz d'échappements soient évacués vers les moyens de collecte.

On peut injecter, pendant le fonctionnement à bas régimes du moteur, de l'air extérieur dans les moyens d'accroissement du volume collecté des gaz d'échappement.

Les autres caractéristiques et avantages de l'invention apparaîtront mieux à la lecture de la description qui va suivre, donnée uniquement à titre illustratif et nullement limitatif, en se référant aux dessins annexés sur lesquels :
- la figure 1 est une vue schématique d'un moteur à combustion interne selon l'invention avec une coupe partielle selon la ligne AA de la figure 2;
- la figure 2 montre schématiquement le moteur selon l'invention avec une coupe partielle selon la ligne BB de la figure 1;
- la figure 3 illustre le moteur selon l'invention avec une coupe schématique partielle selon la ligne CC de la figure 2;
- la figure 4 illustre de manière schématique le moteur selon l'invention en position active;
- la figure 5 est un autre mode de réalisation d'un moteur selon l'invention avec une coupe partielle et
- la figure 6 montre une vue schématique, avec une coupe partielle, d'une variante utilisable sur les moteurs des figures 1 à 5.

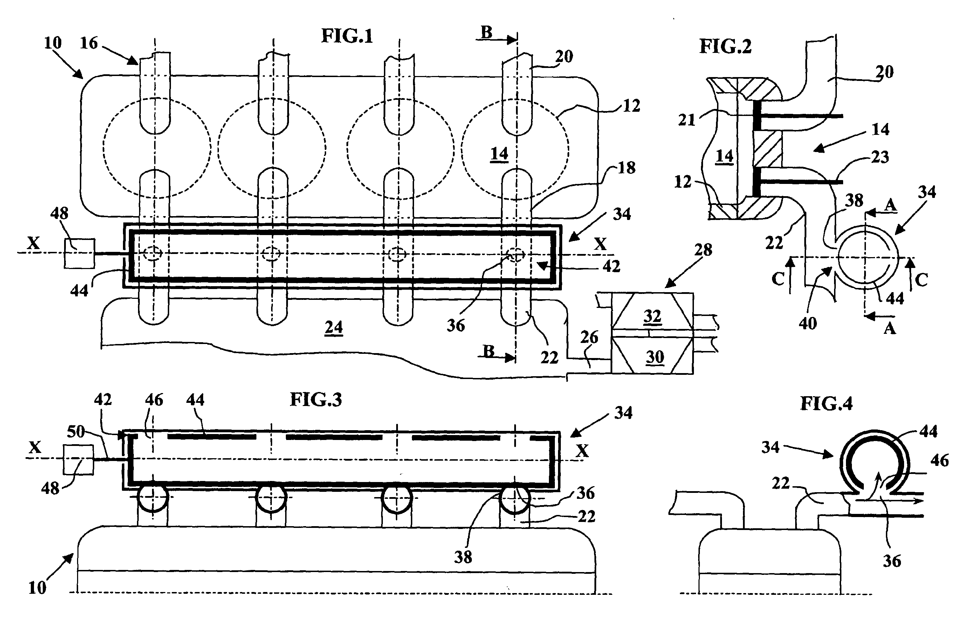

On se réfère maintenant aux figures 1 à 4 qui montrent un moteur à combustion interne à quatre temps 10 comprenant au moins deux cylindres 12, ici quatre, avec une chambre de combustion 14 et au moins un moyen d'admission 16 et au moins un moyen d'échappement 18. Le moyen d'admission est généralement formé par une tubulure d'admission 20 et un moyen d'obturation, tel qu'une soupape 21, et le moyen d'échappement comporte une tubulure d'échappement 22 avec un moyen d'obturation, comme une soupape 23. Les tubulures d'échappement 22 sont raccordées à un collecteur 24 des gaz brûlés issus des chambres de combustion. La sortie 26 de ce collecteur est reliée à l'entrée d'un turbocompresseur 28 et plus particulièrement à l'entrée d'une turbine 30 qui entraîne un compresseur 32 pour comprimer l'air à admettre dans les chambres de combustion par les tubulures d'admission 20. Les moyens de collecte des gaz d'échappement sont donc formés par les tubulures 22 et le collecteur 24. Ces moyens ont une section et un volume spécifique, qui sont généralement faibles, pour pouvoir récupérer au mieux l'énergie des gaz d'échappement et pour guider les ondes de pression d'échappement de manière à réaliser l'entraînement de la turbine 30 et, par conséquent, la compression de l'air d'admission.

Ce moteur comprend, en outre, des moyens d'accroissement du volume de la collecte des gaz d'échappement issus des chambres de combustion du moteur, qui sont utilisables lorsque le moteur fonctionne à hauts régimes.

Comme illustré sur les figures 1 à 4, ces moyens comprennent une capacité 34 de forme générale cylindrique tubulaire d'axe XX fermée à ses deux extrémités axiales. Cette capacité est en communication sélective avec chacune des tubulures d'échappement 22 par des passages de communication 36 prévus sur ces tubulures, entre les cylindres 14 et le collecteur 24, et sur la capacité. Pour ce faire, la capacité comprend des orifices 38 disposés sur sa paroi périphérique et les tubulures d'échappement 22 sont pourvues également d'orifices 40 qui, dans l'exemple décrit, sont concordants avec ceux de la capacité. Des moyens d'obturation 42 de ces passages sont prévus sous la forme d'un boisseau creux 44 fermé à ses extrémités axiales, logé à l'intérieur de la capacité, et qui est coaxial avec cette capacité. Ce boisseau comporte des lumières 46 dont la position et les dimensions correspondent sensiblement aux dimensions et positions des passages 36. Le boisseau est entraîné en rotation autour de l'axe XX par tous moyens connus, tel qu'un micromoteur électrique 48 relié au boisseau 44 par un axe 50. Ce micromoteur reçoit des instructions de commande par des moyens contrôlant le fonctionnement du moteur, tel que le contrôle moteur.

Pendant le fonctionnement du moteur à bas régimes (d'environ 1000 tr/mn à environ 3000 tr/mn), qui est illustré aux figures 1 à 3, le micromoteur reçoit des instructions de commande pour que le boisseau 44 se trouve dans la position illustrée sur ces figures, les passages de communication 36 étant obturés par la paroi périphérique du boisseau (figures 1 à 3). Les gaz brûlés résultant de la combustion dans chaque chambre 14 sont évacués par chacune des tubulures d'échappement 22. Ces gaz sont dirigés directement vers le collecteur 24 sans pouvoir pénétrer dans la capacité du fait de la fermeture des passages de communication 36. A la sortie 26 de ce collecteur, les gaz d'échappement pénètrent dans le turbocompresseur 28 en entraînant en rotation la turbine 30 qui elle-même entraîne le compresseur.

Dans cette disposition, il est tiré partie de la configuration spécifique du collecteur, tant en section qu'en volume, pour entraîner au mieux la turbine.

En fonctionnement à hauts régimes, c'est-à-dire, à titre d'exemple, au-delà de 3000 tr/mn, le débit, et par conséquent le volume, des gaz d'échappement sortant des chambres de combustion est plus important. Le micromoteur 48 reçoit des instructions de commande du contrôle moteur pour entraîner en rotation le boisseau 44 de façon à ce que ses lumières 46 se trouvent en concordance avec les passages de communication 36 entre les tubulures d'échappement 22 et la capacité 34. Dans cette position, les gaz d'échappement évacués de la chambre de combustion 14 par la tubulure d'échappement 22, pendant la phase d'échappement d'un cylindre, sont dirigés à la fois vers le collecteur 24 et vers la capacité 34, et plus précisément à l'intérieur du boisseau 44 (figure 4). De ce fait, le collecteur et la capacité sont remplis simultanément par les gaz brûlés véhiculés par la tubulure 22. Le cylindre en phase d'échappement a donc une possibilité de remplissage d'un volume plus grand pour collecter les gaz, ce qui permet d'assurer une bonne évacuation de ces gaz. Après remplissage de la capacité par les gaz, ceux-ci sont évacués vers le collecteur 24 par les autres passages de communication prévus sur les tubulures d'échappement des cylindres qui ne sont pas en phase d'échappement. Les gaz sortant du collecteur sont ensuite dirigés vers la turbine du turbocompresseur.

Bien entendu et cela sans sortir du cadre de l'invention, la capacité 34 peut être directement en communication avec le collecteur 24. Dans ce cas, il suffit de deux passages de communication entre cette capacité et ce collecteur pour assurer une collecte supplémentaire des gaz d'échappement lors du fonctionnement à hauts régimes du moteur et la vidange des gaz présents dans cette capacité vers le collecteur.

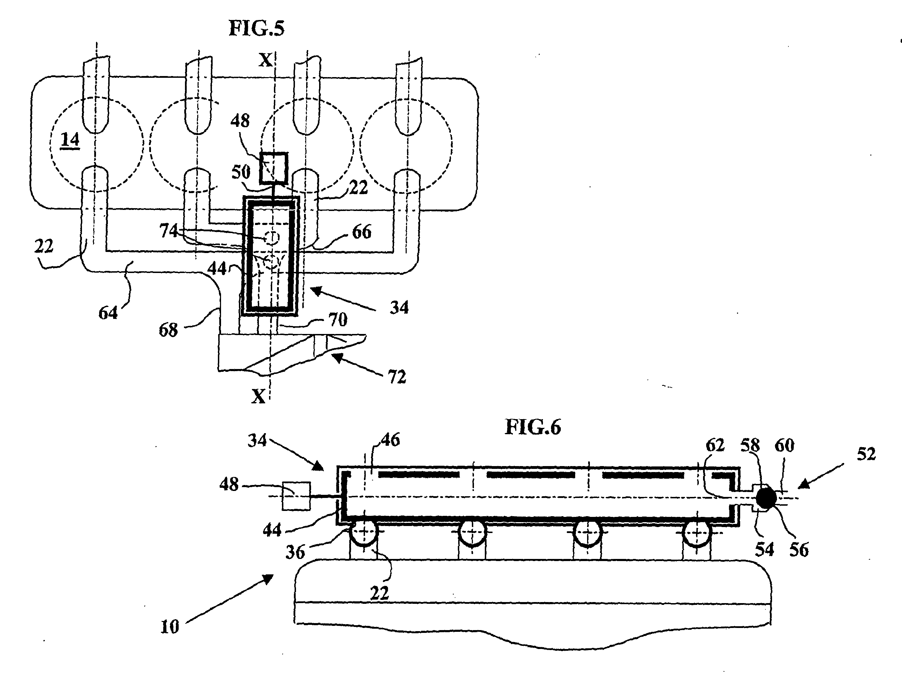

On se reporte maintenant à la figure 5 qui montre un autre mode de réalisation d'un moteur selon l'invention semblable à celui des figures 1 à 4 et qui comporte, pour l'essentiel, les mêmes références que ces figures.

Dans ce mode de réalisation, les tubulures d'échappement 22 du premier cylindre et du dernier cylindre, en partant de la gauche de la figure 5, sont connectées à un premier collecteur 64 alors les tubulures d'échappement 22 du deuxième et troisième cylindres sont connectées à un deuxième collecteur 66. Cette configuration, dite à collecteurs séparés, est utilisée en association avec une technologie spécifique de turbocompresseur à double entrée 72, dénommé turbocompresseur "Twin Scroll". Dans ce type de turbocompresseur, l'entrée des gaz d'échappement, au niveau de la turbine, est divisée en deux sections, une première section raccordée par l'intermédiaire du premier collecteur 64 aux échappements d'une partie des cylindres et une deuxième section raccordée au deuxième collecteur 66 connecté aux échappements des autres cylindres. Ainsi, la sortie 68 du premier collecteur 64 est reliée à la première section alors que la sortie 70 du deuxième collecteur est reliée à la deuxième section.

Ce moteur comprend également une capacité 34 d'axe général XX, semblable à celle des figures 1 à 4, qui est en communication sélective avec les premier 64 et deuxième 66 collecteurs par des passages de communication 74 au nombre de deux, un pour chaque collecteur. Cette capacité comprend des moyens d'obturation des passages 74 sous la forme également d'un boisseau creux 44 logé à l'intérieur de la capacité. Ce boisseau comporte, comme déjà décrit en relation avec les figures 1 à 4, des lumières dont les positions et les dimensions correspondent sensiblement aux dimensions et positions des passages 74. Le boisseau est entraîné en rotation autour de l'axe XX par tous moyens connus, tel qu'un micromoteur électrique 48 relié au boisseau 44 par un axe 50.

Le fonctionnement d'un tel moteur est sensiblement identique à celui décrit précédemment.

En fonctionnement du moteur à bas régimes, le boisseau 44 est dans une position telle que les passages de communication 74 sont fermés par la paroi périphérique de ce boisseau. Les gaz brûlés résultant de la combustion dans chaque chambre 14 sont évacués par chacune des tubulures d'échappement 22 dans leurs collecteurs respectifs 64 et 66 sans pouvoir pénétrer dans la capacité. Les gaz d'échappement sortant des collecteurs par les sorties 68 et 70 sont ensuite dirigés vers les sections d'entrée du turbocompresseur 72 pour entraîner en rotation la turbine qui entraîne à son tour le compresseur.

Egalement, dans cette disposition, il est tiré partie de la configuration spécifique des collecteurs, tant en sections qu'en volumes, pour entraîner au mieux la turbine et éviter les retours d'ondes d'échappement dans les collecteurs.

A hauts régimes du moteur, le micromoteur 48 commande en rotation le boisseau 44 de façon à ce que ses lumières se trouvent en concordance avec les passages de communication 74 entre les collecteurs 64, 66 et la capacité 34. Dans cette position, pendant la phase d'échappement d'un cylindre, les gaz d'échappement évacués de la chambre de combustion 14, par exemple par la tubulure d'échappement 22 du premier cylindre, sont dirigés à la fois vers le premier collecteur 64 et la capacité 34 et plus particulièrement à l'intérieur du boisseau 44. Ce collecteur et cette capacité sont donc remplis simultanément par les gaz brûlés véhiculés par la tubulure 22. Le cylindre en phase d'échappement a donc une possibilité plus grande de volume pour collecter les gaz brûlés. Après remplissage de la capacité par les gaz, ceux-ci sont évacués par le second passage de communication 74 vers le deuxième collecteur 66 puis vers la sortie 70 alors que les gaz présents dans le premier collecteur 64 sont dirigés vers la sortie 68.

Bien entendu et cela sans sortir du cadre de l'invention, cette capacité peut être reliée par des passages de communication aux tubulures de sortie 68 et 70 des collecteurs 64 et 66 en lieu et place des passages de communication sur les collecteurs 64, 66.

En outre, la capacité peut également être connectée par des passages de communication aux tubulures d'échappement 22 dans une disposition semblable à celle décrite en relation avec les figures 1 à 4.

Dans la variante de la figure 6, qui est utilisable sur les moteurs décrits en relation avec les figures 1 à 5, le moteur comprend, en outre, un moyen d'injection d'air 52 dans la capacité 34, injection d'air qui facilite le post-traitement de certains polluants présents dans les gaz d'échappement. Cette injection d'air s'opère généralement à bas régimes et, préférentiellement lors du démarrage à froid du moteur.

En effet, les gaz d'échappement contiennent des hydrocarbures imbrûlés (HC) dont le rejet dans l'atmosphère doit être minimisé. Pour pouvoir traiter ces HC, les moteurs à combustion interne comprennent généralement des dispositifs anti-pollutions, comme des catalyseurs, qui sont connectés à l'échappement du moteur et qui permettent de traiter en grande partie ces HC par oxydation. Ces catalyseurs sont opérationnels à partir d'une certaine température de démarrage, dite de "light off", qui ne peut être atteinte que lorsque les gaz d'échappement ont dépassé un niveau de température. Comme cela est connu en soi, pour réaliser une telle opération, il est prévu d'apporter un surcroît d'oxygène dans les gaz d'échappement grâce à une injection d'air extérieur de manière à réaliser une oxydation supplémentaire de ces gaz visant à augmenter leur température.

Ce moyen d'injection d'air 52 comprend, à titre d'exemple, un clapet 54 avec un siège 56 logeant une bille 58. Ce clapet est muni d'une entrée d'air extérieur 60 raccordée à tous moyens d'alimentation en air et une sortie 62 qui débouche à l'intérieur de la capacité et plus particulièrement à l'intérieur du boisseau 44. A l'état de repos, la bille prend appui sur le siège 56 et obture l'entrée d'air 60. En cas d'opération de post-traitement des gaz d'échappement, le micromoteur 48 reçoit des instructions du contrôle moteur pour entraîner en rotation le boisseau 44 jusqu'à ce que les lumières 46 se trouvent en concordance avec les passages de communication 36 prévus entre les tubulures d'échappement 22 et la capacité 34. De l'air frais extérieur est ensuite introduit par l'entrée 60 du clapet 54 avec une pression suffisante pour vaincre la pression des gaz d'échappement présents dans cette capacité et repousser la bille hors de son siège. Cet air frais pénètre dans le volume creux du boisseau 44 et se mélange aux gaz d'échappement en augmentant la quantité d'oxygène présent dans ces gaz. Ce mélange est évacué de la capacité 34 vers le collecteur 24 ou vers les collecteurs 64, 66 pour se mélanger avec les gaz d'échappement présents dans ce collecteur. Ce nouveau mélange est ensuite dirigé vers le dispositif de traitement des HC (non représenté) qui peut être situé en amont ou en aval du turbocompresseur. Une fois l'opération d'injection d'air terminée, le micromoteur 48 commande en rotation le boisseau 44 de manière à ce que sa paroi périphérique obstrue les passages de communication 36 et l'alimentation en air extérieur est fermée.

La présente invention n'est pas limitée aux modes de réalisation décrits mais englobe toutes variantes et équivalents tombant dans la portée des revendications attachées.

## Revendications

1. Moteur à combustion interne suralimenté à quatre temps comportant au moins deux cylindres avec une chambre de combustion (14), un moyen d'admission d'air (16) comprenant une tubulure (20) associée à un moyen d'obturation (21), un moyen d'échappement (18) comportant une tubulure (22) avec un moyen d'obturation (23), des moyens de collecte des gaz d'échappement comprenant ladite tubulure d'échappement et au moins un collecteur (24), des moyens d'accroissement (34) du volume collecté des gaz d'échappement en communication sélective avec les moyens de collecte de gaz d'échappement, et des moyens d'obturation (44) de la communication entre lesdits moyens de collecte les moyens d'accroissement (34), **caractérisé en ce que** les moyens d'accroissement comprennent une capacité (34) et que les moyens d'obturation comprennent un boisseau rotatif (44), logé à l'interieur de la capacité (34).

2. Moteur à combustion interne suralimenté selon la revendication 1, **caractérisé en ce que** la capacité (34) est en communication sélective avec les tubulures d'échappement (22).

3. Moteur à combustion interne suralimenté selon la revendication 1, **caractérisé en ce que** la capacité (34) est en communication sélective avec au moins un collecteur (24; 64, 66).

4. Moteur à combustion interne suralimenté selon la revendication 1, **caractérisé en ce que** les moyens d'obturation (44) sont contrôlés par un moyen de commande (48).

5. Moteur à combustion interne suralimenté selon la revendication 1, **caractérisé en ce que** le boisseau (44) comprend des lumières (46).

6. Procédé de fonctionnement d'un moteur à combustion interne suralimenté comportant au moins deux cylindres avec une chambre de combustion (14), un moyen d'admission d'air (16) comprenant une tubulure (20) associée à un moyen d'obturation (21), un moyen d'échappement (18) comportant une tubulure (22) avec un moyen d'obturation (23), des moyens de collecte des gaz d'échappement comprenant lesdites tubulures et au moins un collecteur (24), des moyens d'accroissement (34) du volume collecté des gaz d'échappement, en communication sélective avec les moyens de collecte de gaz d'échappement, et des moyens d'obturation (44) de la communication entre lesdits moyens de collecte et les moyens d'accroissement (34), **caractérisé en ce que** on commande les moyens d'obturation pour que, pendant le fonctionnement à hauts régimes du moteur, les gaz d'échappement soient évacués, d'une part, vers les moyens de collecte (22, 24, 64, 65) et, d'autre part, vers les moyens d'accroissement (34) du volume collecté des gaz d'échappement et, pendant le fonctionnement à bas régimes du moteur, pour que ces gaz d'échappements soient évacués vers les moyens de collecte (24; 64, 66, 22).

7. Procédé selon la revendication 6, **caractérisé en ce qu'**on injecte, pendant le fonctionnement à bas régimes du moteur, de l'air extérieur dans les moyens d'accroissement (34) du volume collecté des gaz d'échappement.

## Claims

1. A supercharged four-stroke internal combustion engine comprising at least two cylinders with a combustion chamber (14), an air intake means (16) including a pipe (20) associated with a shutoff means (21), an exhaust means (18) comprising a pipe (22) with a shutoff means (23), exhaust gas collection means including said exhaust pipe and at least one collector (24), means (34) for increasing the collected volume of the exhaust gases in selective communication with the exhaust gas collection means, and means (44) for shutting off the communication between the said collection means and the increasing means, **characterised in that** the increasing means include a volume (34) and **in that** the shutoff means include a rotating valve (44) housed inside the volume (34).

2. The supercharged internal combustion engine according to claim 1, **characterised in that** the volume (34) is in selective communication with the exhaust pipes (22).

3. The supercharged internal combustion engine according to claim 1, **characterised in that** the volume (34) is in selective communication with at least one collector (24; 64, 66).

4. The supercharged internal combustion engine according to claim 1, **characterised in that** the shutoff means (44) are controlled by a control means (48).

5. The supercharged internal combustion engine according to claim 1, **characterised in that** the valve (44) includes ports (46).

6. A method for operating a supercharged internal combustion engine comprising at least two cylinders with a combustion chamber (14), an air intake means (16) including a pipe (20) associated with a shutoff means (21), an exhaust means (18) comprising a pipe (22) with a shutoff means (23), exhaust gas collection means including said pipes and at least one collector (24), means (34) for increasing the collected volume of the exhaust gases, in selective communication with the exhaust gas collection means, and means (44) for shutting off the communication between said collection means and the increasing means (34), **characterised in that** the shutoff means are controlled such that, during operation of the engine at high speed, the exhaust gases are evacuated, on the one hand, to the collection means (22, 24, 64, 66) and, on the other hand, to the means (34) for increasing the collected volume of the exhaust gases and, during operation of the engine at low speeds, such that these exhaust gases are evacuated to the collection means (24; 64, 66, 22).

7. The method according to claim 6, **characterised in that**, during operation of the engine at low speeds, outside air is injected into the means for increasing (34) the collected volume of the exhaust gases.

## Patentansprüche

1. Viertaktaufladeverbrennungsmotor, umfassend mindestens zwei Zylinder mit einer Brennkammer (14), ein Lufteinlassmittel (16), umfassend ein Rohr (20), das mit einem Verschlussmittel (21) verbunden ist, ein Auspuffmittel (18), umfassend ein Rohr (22) mit einem Verschlussmittel (23), Abgaskollektormittel, umfassend das Auspuffrohr und mindestens einen Kollektor (24), Mittel (34) zur Vergrößerung des Kollektionsvolumens der Abgase, die mit den Kollektormitteln der Abgase in selektiver Verbindung stehen, und Verschlussmittel (44) für die Verbindung zwischen den Kollektormitteln und den Volumenvergrößerungsmitteln (34), **dadurch gekennzeichnet, dass** die Volumenvergrößerungsmittel eine Kapazität (34) umfassen, und dass die Verschlussmittel einen Drehkegel (44) umfassen, der im Inneren der Kapazität (34) angeordnet ist.

2. Aufladeverbrennungsmotor nach Anspruch 1, **dadurch gekennzeichnet, dass** die Kapazität (34) mit den Auspuffrohren (22) in selektiver Verbindung steht.

3. Aufladeverbrennungsmotor nach Anspruch 1, **dadurch gekennzeichnet, dass** die Kapazität (34) mit mindestens einem Kollektor (24; 64, 66) in selektiver Verbindung steht.

4. Aufladeverbrennungsmotor nach Anspruch 1, **dadurch gekennzeichnet, dass** die Verschlussmittel (44) durch ein Steuermittel (48) kontrolliert werden.

5. Aufladeverbrennungsmotor nach Anspruch 1, **dadurch gekennzeichnet, dass** der Kegel (44) Öffnungen (46) umfasst.

6. Funktionsverfahren eines Aufladeverbrennungsmotors, umfassend mindestens zwei Zylinder mit einer Brennkammer (14), ein Lufteinlassmittel (16), umfassend ein Rohr (20), das mit einem Verschlussmittel (21) verbunden ist, ein Auspuffmittel (18), umfassend ein Rohr (22) mit einem Verschlussmittel (23), Abgaskollektormittel, umfassend das Auspuffrohr und mindestens einen Kollektor (24), Mittel (34) zur Vergrößerung des Kollektionsvolumens der Abgase, die mit den Kollektormitteln der Abgase in selektiver Verbindung stehen, und Verschlussmittel (44) für die Verbindung zwischen den Kollektormitteln und den Volumenvergrößerungsmitteln (34), **dadurch gekennzeichnet, dass** die Verschlussmittel derart gesteuert werden, dass während des Betriebs des Motors mit hohen Drehzahlen die Abgase einerseits zu den Kollektormitteln (22, 24, 64, 66) und andererseits zu den Mitteln (34) zur Vergrößerung des Kollektionsvolumens der Abgase abgeleitet werden, und dass während des Betriebs des Motors mit niedrigen Drehzahlen diese Abgase zu den Kollektormitteln (24; 64, 66, 22) abgeleitet werden.

7. Verfahren nach Anspruch 6, **dadurch gekennzeichnet, dass** während des Betriebs des Motors mit niedrigen Drehzahlen Außenluft in die Mittel (34) zur Vergrößerung des Kollektionsvolumens der Abgase eingeleitet wird.
